# EUROPEAN PATENT APPLICATION

(11) **EP 2 733 595 A2**
(43) Date of publication of application: **21.05.2014**
(21) Application number: 13192789.9
(22) Date of filing: 13.11.2013
(51) Int. Cl.: G06F 3/0488

(54) **Method and apparatus for providing user interface through proximity touch input**

(30) Priority: 19.11.2012 KR 20120131020
(71) Applicant: Samsung Electronics Co., Ltd, Gyeonggi-do 443-742 (KR)
(72) Inventor: Kim, Tae-Yeon, 443-742 Gyeonggi-do (KR); Park, Hyun-Mi, 443-742 Gyeonggi-do (KR); Jeon, Jin-Young, 443-742 Gyeonggi-do (KR); Oh, Sae-Gee, 443-742 Gyeonggi-do (KR); Lee, Jae-Myoung, 443-742 Gyeonggi-do (KR)
(74) Representative: Jenkins, Richard Gavin

(57) **Abstract**

A method and an apparatus for providing a user interface through a proximity touch input are provided. The method includes selecting at least one of multiple functions according to a preset criterion upon generation of a proximity touch input by an input means, displaying an icon corresponding to the selected function as a recommended icon, and executing a function corresponding to a recommended icon selected from the displayed recommended icon.

## Description

### BACKGROUND OF THE INVENTION

### 1. Field of the Invention:

The present invention relates to a technique for providing a user interface environment in a mobile device equipped with a touch screen. More particularly, the present invention relates to a method and apparatus for providing a user interface through a proximity touch input in a mobile device capable of recognizing hovering of an input means such as an electronic pen or a user's hand.

### 2. Description of the Related Art:

Recently, various services and additional functions provided in mobile devices such as smart phones and tablet PCs have been increasing. To improve the utility value of the mobile devices and satisfy various needs, a variety of functions executable in the mobile devices have been developed.

Most of the recent mobile devices are equipped with touch screens to provide touch input schemes using a user's finger, an electronic pen, or the like. The touch input schemes include a touch input scheme based on contact with a user's body or an input means capable of generating a touch and a non-contact input means such as hovering. Such touch input schemes provide convenient user interfaces.

Korean Patent Application Publication No. 2010-0001601 (entitled "Portable Terminal Having Proximity Touch Sensing Function", invented by Jahoon Gu, et. al., filed by LG Electronics Inc., and published on January 6, 2010) discloses a technique using a touch input scheme. This reference discloses a technique for displaying a sub-menu of an image object corresponding to a proximity touch by sensing the proximity touch of an input medium (a finger or any object whose touch on a touch pad is recognizable).

Several touch-input related techniques have been developed and used. With the increasing demand for touch screens, research on various touch input techniques has been steadily conducted. As demands for more convenient manipulation and as expectation with respect to touch input has increased, related techniques have been actively studied to develop improved touch input techniques.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a method and apparatus for providing a user interface through a proximity touch input by using an input means such as an electronic pen or a user's hand to allow simple manipulation of the user interface in a proximity touch input in a mobile device equipped with a touch screen.

In accordance with an aspect of the present invention, a method for providing a user interface through a proximity touch input is provided. The method includes selecting at least one of multiple functions according to a preset criterion upon generation of a proximity touch input by an input means, displaying an icon corresponding to the selected function as a recommended icon, and executing a function corresponding to a recommended icon selected from the displayed recommended icon.

In accordance with another aspect of the present invention, an apparatus for providing a user interface through a proximity touch input is provided. The apparatus includes a touch screen for receiving input corresponding to a user's manipulation and for displaying an execution image of an application program, an operating state, and a menu state and a controller for controlling the touch screen and for controlling an operation of selecting at least one of multiple functions according to a preset criterion upon generation of a proximity touch input by an input means, an operation of displaying an icon corresponding to the selected function as a recommended icon, and an operation of executing a function corresponding to a recommended icon selected from the displayed recommended icon.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a mobile device according to an exemplary embodiment of the present invention;

FIG. 2 is a flowchart illustrating an operation of providing a user interface using an electronic pen according to a first exemplary embodiment of the present invention;

FIGs. 3A through 3C are exemplary diagrams illustrating a screen for displaying an icon corresponding to a preset function according to the first exemplary embodiment of the present invention;

FIG. 4 is an exemplary diagram illustrating a screen for displaying an icon corresponding to a preset function according to the first exemplary embodiment of the present invention;

FIG. 5 is an exemplary diagram illustrating a screen for displaying an icon corresponding to a preset function according to the first exemplary embodiment of the present invention;

FIGs. 6A and 6B are exemplary diagrams illustrating a screen for displaying an icon corresponding to a preset function according to the first exemplary embodiment of the present invention;

FIGs. 7A and 7B are exemplary diagrams illustrating a screen for displaying a description related to an icon corresponding to a preset function according to an exemplary embodiment of the present invention;

FIG. 8 is an exemplary diagram illustrating a screen for selecting an icon corresponding to a preset function according to an exemplary embodiment of the present invention;

FIG. 9 is a flowchart illustrating an operation of providing a user interface using an electronic pen according to a second exemplary embodiment of the present invention;

FIG. 10 is an exemplary diagram illustrating a list of frequently used functions according to the second exemplary embodiment of the present invention;

FIG. 11 is a flowchart illustrating an operation of providing a user interface using an electronic pen according to a third exemplary embodiment of the present invention; and

FIG. 12 is an exemplary diagram illustrating a list of application-related functions according to the third exemplary embodiment of the present invention.

Throughout the drawings, it should be noted that like reference numbers are used to depict the same or similar elements, features, and structures.

### DETAILED DESCRIPTION OF THE EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding, but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention is provided for illustration purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

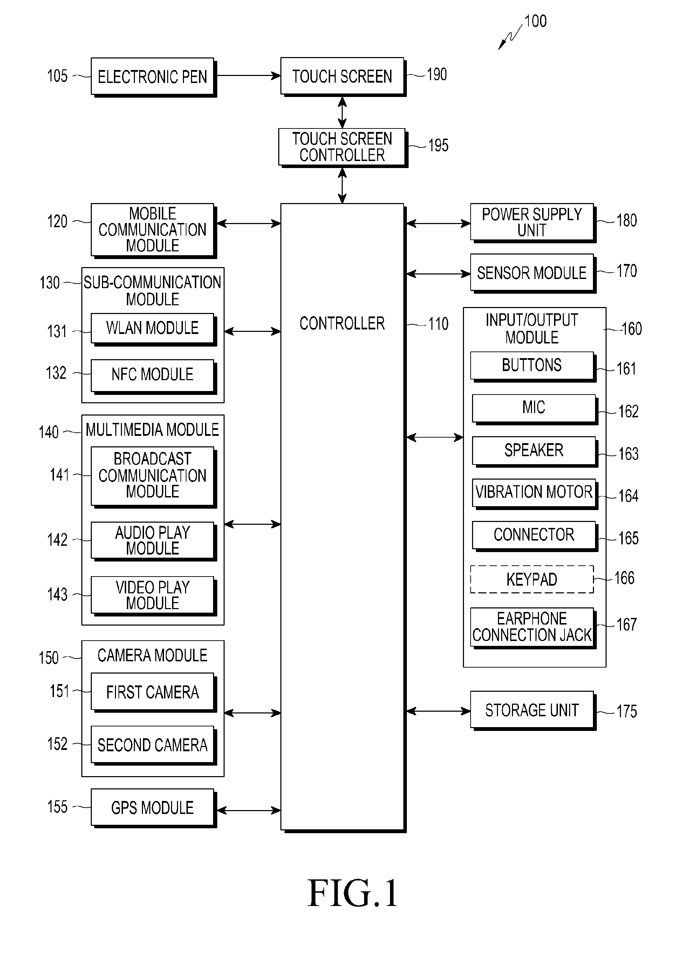

FIG. 1 is a block diagram illustrating a mobile device according to an exemplary embodiment of the present invention.

Referring to FIG. 1, a mobile device 100 may include a display 190 and a display controller 195. The mobile device 100 may also include a controller 110, a mobile communication module 120, a sub-communication module 130, a multimedia module 140, a camera module 150, a Global Positioning System (GPS) module 155, an input/output module 160, a sensor module 170, a storage unit 175, and a power supply unit 180. The sub-communication module 130 includes at least one of a Wireless Local Area Network (WLAN) module 131 and a Near Field Communication (NFC) module 132. The multimedia module 140 includes at least one of a broadcast communication module 141, an audio play module 142, and a video play module 143. The camera module 150 includes at least one of a first camera 151 and a second camera 152, and the input/output module 160 includes at least one of a plurality of buttons 161, a microphone (MIC) 162, a speaker 163, a vibration motor 164, a connector 165, an optional keypad 166, and an earphone connection jack 167. In the following description, the display 190 and the display controller 195 are, for example, a touch screen and a touch screen controller, respectively.

The controller 110 controls the mobile communication module 120, the sub-communication module 130, the multimedia module 140, the camera module 150, the GPS module 155, the input/output module 160, the sensor module 170, the storage unit 175, the power supply unit 180, the touch screen 190, and the touch screen controller 195. The controller 110 controls an operation of selecting at least one of multiple functions according to a preset criterion in a proximity touch input by an input means on the touch screen 190. The input means may be a part of the user's body such as a finger or may be an input means which may generate a touch, like an electronic pen 105. The controller 110 controls an operation of displaying icons corresponding to selected functions as recommended icons and an operation of executing a function corresponding to a recommended icon selected from among the recommended icons.

The mobile communication module 120 allows the mobile device 100 to be connected with an external device through mobile communication by using at least one or plural antennas (not shown) under control of the controller 110. The mobile communication module 120 transmits/receives radio signals for various functions, such as voice call, video call, Short Messaging Service (SMS) or Multimedia Message Service (MMS) with a cellular phone (not shown), a smart phone (not shown), a tablet PC, or other devices (not shown) having a phone number which is input to the mobile device 100.

The sub-communication module 130 may include at least one of the WLAN module 131 and the NFC module 132.

The WLAN module 131 may be connected with the Internet in a place where an Access Point (AP, not shown) is installed, under control of the controller 110. The WLAN module 131 supports the WLAN standard IEEE 802.11x of the Institute of Electrical and Electronics Engineers (IEEE). The NFC module 132 may wirelessly perform NFC between the mobile device 100 and an image forming apparatus (not shown) under control of the controller 110.

The mobile device 100 may include at least one of the mobile communication module 120, the WLAN module 131, and the NFC module 132, according to a capability or design of the mobile device 100. For example, the mobile device 100 may include a combination of the mobile communication module 120, the WLAN module 131, and the NFC module 132 according to its capability.

The multimedia module 140 may include the broadcast communication module 141, the audio play module 142, or the video play module 143. The broadcast communication module 141 may receive a broadcast signal (for example, a TV broadcast signal, a radio broadcast signal, or a data broadcast signal) and broadcast additional information (for example, an Electric Program Guide (EPG) or an Electric Service Guide (ESG)) which are output from a broadcasting station via a broadcast communication antenna (not shown), under control of the controller 110. The audio play module 142 may play a digital audio file (for example, a file having a file extension such as mp3, wma, ogg, or wav) which is stored or received under control of the controller 110. The video play module 143 may play a digital video file (for example, a file having a file extension such as mpeg, mpg, mp4, avi, mov, or mkv) which is stored or received under control of the controller 110. The video play module 143 may also play a digital audio file.

The multimedia module 140 may include the audio play module 142 and the video play module 143 except for the broadcast communication module 141. The audio play module 142 or the video play module 143 of the multimedia module 140 may be included in the controller 110.

The camera module 150 may include at least one of a first camera 151 and a second camera 152 which capture a still image or a moving image under control of the controller 110.

The GPS module 155 receives electric waves from a plurality of GPS satellites (not shown) on the Earth's orbit, and calculates a location of the mobile device 100 by using a time of arrival from the GPS satellite (not shown) to the mobile device 100.

The input/output module 160 may include at least one of the plurality of buttons 161, the MIC 162, the speaker 163, the vibration motor 164, the connector 165, the keypad 166, and the earphone connection jack 167.

The buttons 161 may be formed on a front side, a lateral side, or a rear side of a housing of the mobile device 100, and may include at least one of a power/lock button (not shown), a volume button (not shown), a menu button, a home button, a back button, and a search button 161.

The MIC 162 receives a voice or a sound and generates an electric signal under control of the controller 110.

The speaker 163 may output a sound corresponding to various signals (for example, a radio signal, a broadcast signal, a digital audio file, a digital video file, or a picture) of the mobile communication module 120, the sub-communication module 130, the multimedia module 140 or the camera module 150 to outside the mobile device 100, under control of the controller 110. The speaker 163 may output a sound (for example, a button manipulation sound corresponding to a phone call or a ring back tone) corresponding to a function executed by the mobile device 100. One speaker 163 or a plurality of speakers 163 may be formed in a position or positions of the housing of the mobile device 100.

The vibration motor 164 may convert an electric signal into mechanical vibration under control of the controller 110. For example, if the mobile device 100 in a vibration mode receives a voice call from another device (not shown), the vibration motor 164 operates. One vibration motor 164 or a plurality of vibration motors 164 may be formed in the housing of the mobile device 100. The vibration motor 164 may operate in response to a user's touch on the touch screen 190 and continuous motion of the touch on the touch screen 190.

The connector 165 may be used as an interface for connecting the mobile device 100 with an external device (not shown) or a power source (not shown). The mobile device 100 may transmit data stored in the storage unit 175 of the mobile device 100 to an external device (not shown) or receive data from an external device (not shown) via a wired cable connected to the connector 165, under control of the controller 110. The mobile device 100 may receive power from a power source (not shown) via the wired cable connected to the connector 165 or may charge a battery (not shown) by using the power source.

The keypad 166 may receive a key input from the user to control the mobile device 100. The keypad 166 includes a physical keypad (not shown) formed in the mobile device 100 or a virtual keypad (not shown) displayed on the touch screen 190. The physical keypad (not shown) formed on the mobile device 100 may be excluded according to the capability or structure of the mobile device 100.

An earphone (not shown) may be inserted into an earphone connecting jack 167 for connection to the mobile device 100.

The sensor module 170 includes at least one sensor for detecting a state of the mobile device 100. For example, the sensor module 170 may include a proximity sensor for detecting the user's proximity with respect to the mobile device 100, an illumination sensor (not shown) for detecting the amount of light in adjacent to the mobile device 100, a motion sensor (not shown) for detecting an operation of the mobile device 100 (for example, rotation of the mobile device 100 or acceleration or vibration applied to the mobile device 100), a geo-magnetic sensor (not shown) for detecting a point of the compass by using the Earth's magnetic field, a gravity sensor for detecting a direction of gravity, and an altimeter for measuring an atmospheric pressure to detect an altitude. At least one sensor may detect a state, generate a signal corresponding to the detection, and transmit the signal to the controller 110. The sensors of the sensor module 170 may be added or removed according to the capability of the mobile device 100.

The storage unit 175 may store a signal or data which is input/output corresponding to operations of the mobile communication module 120, the sub-communication module 130, the multimedia module 140, the camera module 150, the GPS module 155, the input/output module 160, the sensor module 170, and the touch screen 190, under control of the controller 110. The storage unit 175 may store control programs and applications for control of the mobile device 100 or the controller 110.

The term "storage unit" may include the storage unit 175, a Read Only Memory (ROM) and a Random Access Memory (RAM) in the controller 110, and a memory card (for example, a Secure Digital (SD) card or a memory stick) mounted on the mobile device 100. The storage unit may include a non-volatile memory, a volatile memory, a Hard Disk Drive (HDD), or a Solid State Drive (SSD).

The power supply unit 180 may supply power to one battery or a plurality of batteries (not shown) disposed in the housing of the mobile device 100, under control of the controller 110. One battery or a plurality of batteries (not shown) supply power to the mobile device 100. The power supply unit 180 may supply power input from an external power source (not shown) to the mobile device 100 via a wired cable connected with the connector 165. The power supply unit 180 may supply power, which is wirelessly input from an external power source, to the mobile device 100 by using a wireless charging technique.

The touch screen 190 receives user's manipulation and displays an execution image, an operating state, and a menu state of an application program. The touch screen 190 may provide a user interface corresponding to various services (for example, a call, data transmission, broadcasting, and photographing) to the user. The touch screen 190 may transmit an analog signal corresponding to at least one touch input to the user interface to the touch screen controller 195. The touch screen 190 may receive at least one touch from a user's body part (for example, fingers or thumb) or an input means capable of generating a touch (or a touchable input means) such as the electronic pen 105 (for example, a stylus pen). The touch screen 190 may receive continuous motion of one of the at least one touch. The touch screen 190 may transmit an analog signal corresponding to continuous motion of the input touch to the touch screen controller 195.

According to exemplary embodiments of the present invention, a touch may also include a non-contact touch (proximity touch) as well as a direct contact between the touch screen 190 and a user's body or a touchable input means. A detectable interval from the touch screen 190 may be changed according to the capability or structure of the mobile device 100, and in particular, to separately detect a touch event based on a contact with a user's body or a touchable input means and a non-contact input (for example, hovering) event, the touch screen 190 may be configured to output different values (for example, electric-current values) detected in the touch event and the hovering event. The touch screen 190 preferably outputs different detection values (for example, electric-current values) according to a distance between a space where the hovering event occurs and the touch screen 190.

The touch screen 190 may be implemented as, for example, a resistive type, a capacitive type, an infrared type, or an acoustic wave type.

The touch screen controller 195 converts an analog signal received from the touch screen 190 into a digital signal (for example, X and Y coordinates) and transmits the digital signal to the controller 110. The controller 110 may control the touch screen 190 by using a digital signal received from the touch screen controller 195. For example, the controller 110 may control a shortcut icon (not shown) displayed on the touch screen 190 to be selected or executed in response to the touch event or the hovering event. The touch screen controller 195 may be included in the controller 110.

The touch screen controller 195 detects a value (for example, an electric-current value) output through the touch screen 190 to recognize a distance between the hovering-event occurring space and the touch screen 190, and converts the recognized distance into a digital signal (for example, a Z coordinates) to provide the same to the controller 110.

The touch screen 190 may include at least two touch screen panels capable of detecting a touch or proximity of the user's body or the touchable input means to simultaneously receive inputs by the user's body or the touchable input means. The at least two touch screen panels provide different output values to the touch screen controller 195. The touch screen controller 195 recognizes the different values input from the at least two touch screen panels, thus identifying the inputs from the touch screen 190 as the input by the user's body and the input by the touchable input means.

Exemplary embodiments of the present invention are described below based on an example in which an input means which generates a proximity touch for the hovering event is an electronic pen.

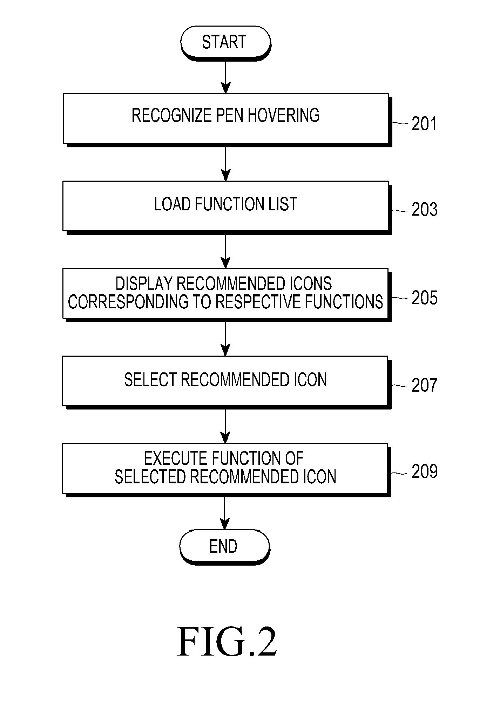

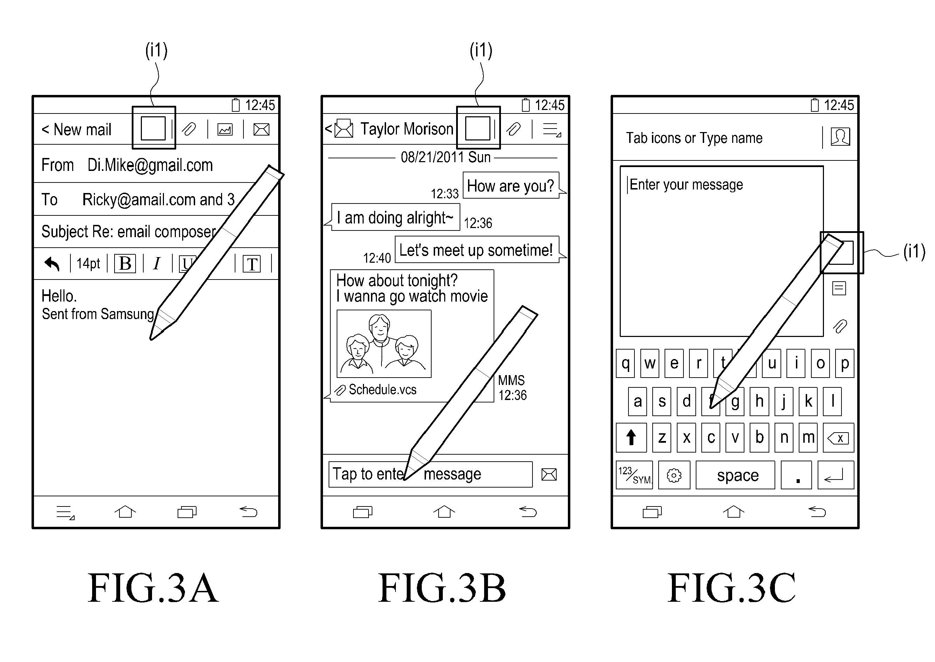

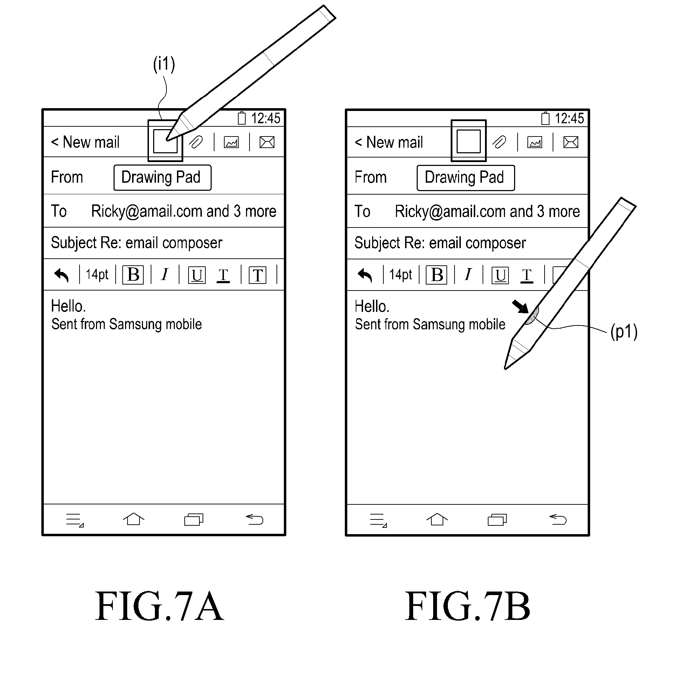

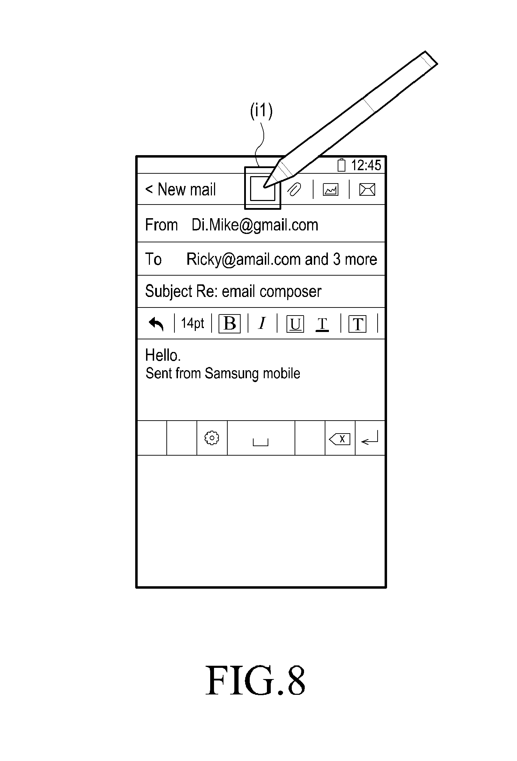

FIG. 2 is a flowchart illustrating an operation of providing a user interface using an electronic pen according to a first exemplary embodiment of the present invention. FIGs. 3A-3C, 4, 5, and 6A-6B are exemplary diagrams illustrating a screen for displaying an icon corresponding to a preset function according to the first exemplary embodiment of the present invention. FIGs. 7A and 7B are exemplary diagrams illustrating a screen for displaying a description related to an icon corresponding to a preset function according to an exemplary embodiment of the present invention. FIG. 8 is an exemplary diagram illustrating a screen for selecting an icon corresponding to a preset function according to an exemplary embodiment of the present invention.

Referring to FIGs. 2-8, upon generation of a proximity touch input using the electronic pen, at least one function is selected from among multiple functions which are set in the mobile device 100, icons corresponding to the respective selected functions are displayed as recommended icons, and a function corresponding to an icon selected from among the displayed recommended icons is executed. The function may be one or more among various functions of the mobile device 100, including a text generation function, a screen zoom-in/zoom-out function, a termination function of an executed screen, and a deletion function of a particular icon. The function may be selected based on preset criteria such as a recorded use frequency of a function and/or a type of an application.

In step 201, pen hovering is recognized according to an input proximity touch of an electronic pen. A distance in which hovering can be recognized may be changed by the user's manipulation. For example, a hovering recognition distance may be changed by the user's manipulation such that in the nighttime, proximity from a longer distance may be recognized than in the daytime.

In step 203, the recognized pen hovering is reflected to load a function list. The function list is a list of functions which are present in the mobile device 100 for the user's convenience among functions present in the mobile device 100 equipped with the touch screen 190. When a proximity touch input is generated using the electronic pen, the function list is loaded. The function list may be a list of one or more functions. The function list may also be set during manufacture of the mobile device 100 and may be changed according to user's setting. The number of functions included in the function list may be set according to the size of an empty region.

In step 205, respective icons corresponding to respective functions of the function list loaded in step 203 are displayed as recommended icons on a predetermined region.

Referring to FIGs. 3A through 3C, during execution of a particular operation of the mobile device 100, upon recognition of hovering of an electronic pen, a recommended icon i1 may be displayed on a preset region. For example, if hovering of the electronic pen is recognized during execution of a particular operation of the mobile device 100, such as generation of an e-mail as shown in FIG. 3A, communication with another user through a text message as shown in FIG. 3B, and input of a particular message as shown in FIG. 3C, then the recommended ion i1 may be displayed on a preset region.

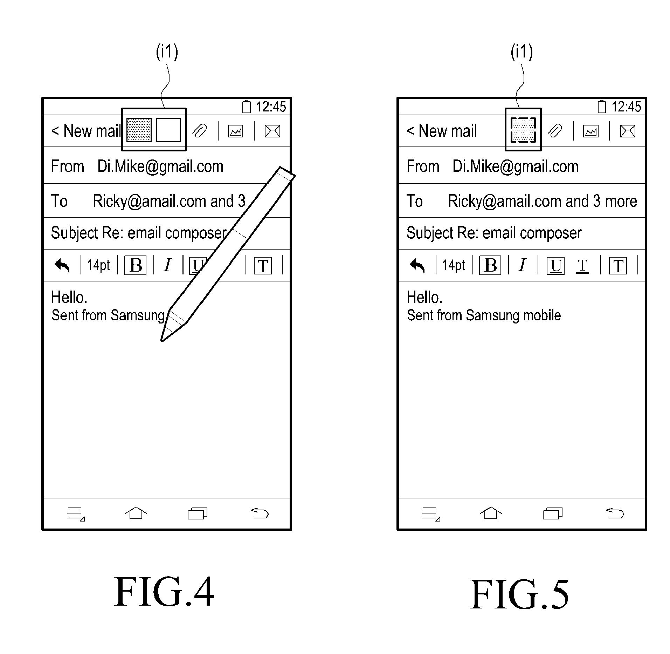

The number of displayed recommended icons i1 may be one or more. If there are multiple functions in the function list, the recommended icon i1 corresponding to each function may be displayed on a preset region, such as shown in FIG. 4. The preset region may be any portion of the entire display screen, such as a top portion, a bottom portion, a right portion, or a left portion on the display screen.

When the recommended icon i1 is displayed, the recommended icon i1 may be displayed overlappingly with another menu item or icon which is displayed in advance, or a region which does not overlap with another menu item or icon which is displayed in advance may be searched to display the recommended icon i1 on the found region.

If any recommended icons i1 correspond to the plurality of functions, the number of recommended icons i1 to be displayed may be determined and the respective determined recommended icons i1 may be displayed on regions which do not overlap with previously displayed other menu items. The number of recommended icons i1 to be displayed on the empty region may be determined taking account of the size of the empty region in the entire display region, and the recommended icons i1 may be displayed on the empty region taking account of the determined number of recommended icons i1 and predetermined priorities of the corresponding functions.

When the recommended icons i1 are displayed, if any recommended icons i1 respectively correspond to the plurality of functions, the display screen may be divided into multiple virtual sections, a priority of each section may be determined, and the recommended icons i1 may be displayed in the corresponding sections in an order from highest priority to lowest priority.

When the recommended icons i1 are displayed, they may be displayed in opaque forms. Referring to FIG. 5, the recommended icons i1 may be displayed in semi-transparent forms such that the recommended icons i1 do not occlude the display screen.

The recommended icons i1 may be typically displayed in opaque forms. Alternatively, when being displayed overlapping with previously displayed other menu items or previously displayed other icons, the recommended icons i1 may be displayed in semi-transparent forms.

The size of the recommended icons i1 may be increased or decreased according to the size of the empty region.

If the recommended icon i1 is selected according to the user's manipulation such as a touch input by the electronic pen or a key input by the electronic pen in step 207, a function corresponding to the selected recommended icon i1 is executed in step 209. For example, referring to FIG. 8, if the recommended ion i1 is selected by a touch with the electronic pen, a function corresponding to the selected recommended icon i1 may be executed. The execution screen of the function may be displayed on a preset region of a portion of the entire display screen, or may be displayed on the entire display screen.

After the recommended icon i1 is displayed, the recommended icon i1 may be continuously displayed rather than disappearing. For example, the recommended icon i1 is displayed on a region which does not overlap with another menu item or/and another icon which is displayed in advance, display of the recommended ion i1 may be maintained.

After the recommended icon i1 is displayed, if a predetermined time has elapsed, the recommended icon i1 may disappear from the touch screen. If a touch input or a preset manipulation input occurs, such as a preset key input or voice input of the electronic pen 105, the recommended icon i1 may disappear from the touch screen. If the user selects execution of a function corresponding to the recommended icon i1 or if execution of the function corresponding to the recommended icon i1 is completed, the recommended icon i1 may disappear from the touch screen.

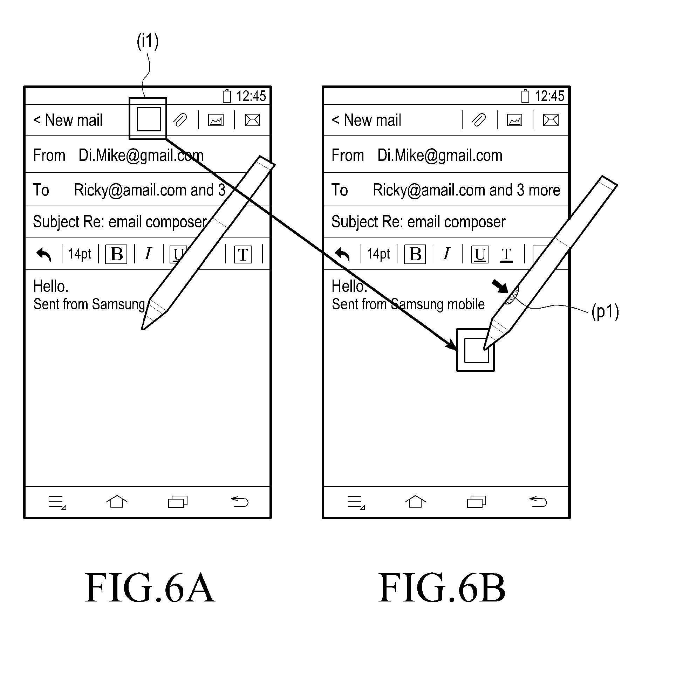

If the electronic pen 105 has a key having a function of moving the recommended icon i1, the recommended icon i1 is first displayed and then upon input of the key for the function in the electronic pen 105, the displayed recommended icon i1 may be moved to and displayed in a hovering recognition position. Referring to FIG. 6A, when the recommended icon i1 is displayed, if the user presses a key p1 of the electronic pen 105, then the recommended icon i1 may be moved to the hovering recognition position as shown in FIG. 6B.

After the recommended icon i1 is displayed, if the electronic pen 105 is caused to approach the displayed recommended icon i1, a description of the recommended icon i1 may be displayed on a preset region. Referring to FIG. 7A, when the recommended icon i1 is displayed, if the electronic pen 105 is caused to approach the displayed recommended icon i1 to allow recognition of hovering of the electronic pen 105, then a description of a function 'Drawing Pad' may be displayed.

If the electronic pen 105 has a key having a function of displaying a description of a function of the recommended icon i1, the recommended icon i1 is first displayed and then upon input of the key for the function in the electronic pen 105, the description of the function of the recommended ion i1 may be displayed on a preset region. Referring to FIG. 7B, when the recommended icon i1 is displayed, if the user presses the key p1 of the electronic pen 105, the description of the function 'Drawing Pad' may be displayed.

The description of the function of the recommended icon i1 may be a simple name of the function or may include a description about an operation executed by the function.

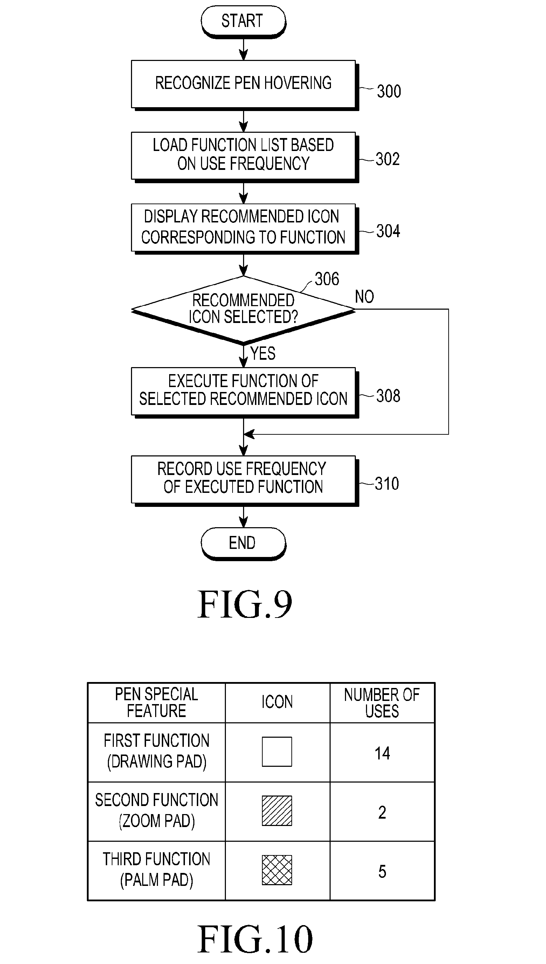

FIG. 9 is a flowchart illustrating an operation of providing a user interface using an electronic pen according to a second exemplary embodiment of the present invention. FIG. 10 is an exemplary diagram illustrating a list of frequently used functions according to the second exemplary embodiment of the present invention.

Referring to FIGs. 9 and 10, when a plurality of recommended icons respectively correspond to a plurality of functions, a function list is loaded according to the use frequency (the number of uses) of functions by the user and the recommended icon i1 corresponding to a function is executed.

In step 300, pen hovering is recognized according to an input proximity touch of the electronic pen 105. In step 302, a function list based on a use frequency is loaded. The function list based on use frequency is configured with functions corresponding to the recommended icons i1, menu items or other icons in an order of high use frequency of function, taking account of the previously recorded use frequency of the recommended icons i1 and the use frequency of other functions which exist in the mobile device 100. If there is no record of the use frequency of functions, a default function list is loaded.

In step 304, icons corresponding to functions of the function list are displayed as the recommended icons i1. The number of recommended icons i1 corresponding to functions to be displayed may vary with a user setting or a device setting of the mobile device 100. The number of recommended icons i1 corresponding to the functions to be displayed may be determined such that the recommended icons i1 are displayed in a way not to overlap with other menu items or other icons on the display screen. For example, referring to FIG. 10, pen hovering is recognized and if the current display screen has a space on which only two recommended icons i1 can be displayed, only the recommended icons i1 corresponding to a first function and a second function which have higher priorities based on high use frequencies may be displayed on the empty space of the display screen.

In step 306, whether to select the recommended icon i1 is determined. If the recommended icon i1 is selected, the process goes to step 308. If the recommended icon i1 is not selected, the process goes to step 310. In step 308, the function of the selected recommended icon i1 is executed. In step 310, the use frequency of the executed function is recorded. For example, in step 310, the number of uses (use frequency) of each of the first function, the second function, and the third function may be recorded and stored as shown in FIG. 10.

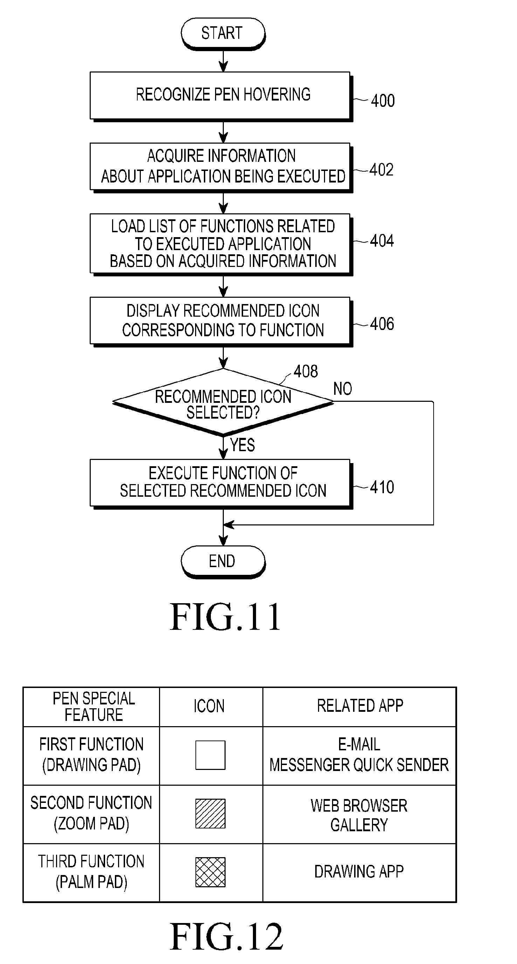

FIG. 11 is a flowchart illustrating an operation of providing a user interface using an electronic pen according to a third exemplary embodiment of the present invention. FIG. 12 is an exemplary diagram illustrating a list of application-related functions according to the third exemplary embodiment of the present invention.

Referring to FIGs. 11 and 12, a plurality of recommended icons i1 respectively corresponding to a plurality of functions are displayable, and if an application is being executed, information about the application being executed is acquired to load a list of preset functions related to the application, such that the recommended icon i1 is executed.

Referring to FIG. 11, in step 400, pen hovering is recognized upon an input proximity touch of the electronic pen 105. In step 402, information about an application which is being executed is acquired. Information about functions related to the application which is being executed among a plurality of functions of the mobile device 100 or information of a list of preset functions related to the application is acquired. The list of the preset functions related to the application may be input by a manufacturer of the mobile device 100 or may be directly input or changed by the user. In step 404, the list of the functions related to the application which is being executed according to the acquired information is loaded. In step 406, the recommended icons i1 corresponding to the functions are displayed on preset regions. Referring to FIG. 12, for applications 'E-mail', 'Messenger', and 'Quick Sender' a 'first function' is set and stored as the recommended icon i1 corresponding to a function related to the applications, such that upon execution of one of the applications 'E-mail', 'Messenger', and 'Quick Sender', the 'first function' is loaded and thus the 'first function' recommended icon i1 may be displayed. In step 408, whether to select the recommended icon i1 is determined. If the recommended icon i1 is selected, the process goes to step 410. If the recommended icon i1 is not selected, the process is terminated. In step 410, the function corresponding to the selected recommended icon i1 is executed.

The operation of loading the function list may be executed, taking account of both the use frequency of the function as in FIG. 9 and the type of the application as in FIG. 11. For example, in execution of the application stored in the mobile device 100, from the list of functions related to the application which is being executed, the list of functions related to the application which is being executed may be loaded according to the recorded use frequency of functions.

As described above, by using the method and apparatus for providing a user interface through a proximity touch input according to exemplary embodiments of the present invention, upon input of a proximity touch into a mobile device, a menu of a main function of the mobile device, such as a menu of a frequently used function in the mobile device or a menu of a function related to a menu which is being executed, is displayed, such that the user may conveniently select and execute a desired function of the mobile device.

It can be seen that exemplary embodiments of the present invention may be implemented with hardware, software, or a combination of hardware and software. The software may be stored, whether or not erasable or re-recordable, in a volatile or non-volatile storage such as ROM; a memory such as RAM, a memory chip, a device, or an integrated circuit; and an optically or magnetically recordable and machine (e.g., computer)-readable storage medium such as a Compact Disc (CD), a Digital Versatile Disk (DVD), a magnetic disk, or a magnetic tape. It can be seen that a memory which can be included in a host may be an example of a non-transitory machine-readable storage medium which is suitable for storing a program or programs including instructions for implementing the exemplary embodiments of the present invention. Therefore, exemplary embodiments of the present invention include a program including codes for implementing a device or method claimed in an arbitrary claim and a non-transitory machine-readable storage medium for storing such a program. The program may be electronically transferred through an arbitrary medium such as a communication signal delivered through wired or wireless connection, and the present invention properly includes equivalents thereof.

As described above, the structures and operations according to the exemplary embodiments of the present invention can be made, and while exemplary embodiments of the present invention have been shown and described with reference to certain embodiments thereof, various embodiments of the present invention and various changes or modifications may be made as well. For example, when describing an operation of loading a function list according to a preset criterion and displaying the recommended icons i1 respectively corresponding to functions of the function list, in execution of an application, an operation corresponding to a function related to the application which is being executed has been described in FIG. 11, but in practice, exemplary embodiments of the present invention may be applied to execution of various menus of a mobile device such as a home screen of a mobile terminal or execution of Internet. In addition, according to exemplary embodiments of the present invention, by using an example in which an input means is an electronic pen of an electro-magnetic resonance type, it has been described that upon generation of a proximity touch input with the electronic pen, hovering is recognized to display a recommended icon corresponding to a function which exists in a mobile device, a recommended icon is displayed taking account of the use frequency of a function by the user, and a recommended icon related to an application is displayed. However, the input means for generating a proximity touch input according to exemplary embodiments of the present invention may be a touch by the user's body part (for example, a touch by hand) using a capacitance type as well as the electronic pen of the disclosed embodiments, and upon input of a proximity touch input with the user's body part, hovering may be recognized and a corresponding recommended icon may be displayed in the mobile device.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for providing a user interface through a proximity touch input, the method comprising:
selecting at least one of multiple functions according to a preset criterion upon generation of a proximity touch input by an input means;
displaying an icon corresponding to the selected function as a recommended icon; and
executing a function corresponding to a recommended icon selected from the displayed recommended icon.

2. The method of claim 1, wherein the input means comprises a user's body part or an electronic pen.

3. The method of claim 1, wherein the preset criterion is a recorded use frequency of a function,
wherein the selecting of the at least one of the multiple functions comprises:
recognizing hovering according to the input proximity touch;
loading a function list in an order from high use frequency to low use frequency by taking account of a use frequency in recognition of hovering, and loading the function list; and
loading a default function list if there is no record of the use frequency of the function in recognition of hovering, and
wherein the executing of the function corresponding to the recommended icon selected from the displayed recommended icon comprises:
receiving a selection signal of the recommended icon, generated by a touch input, in generation of the touch input;
executing the function corresponding to the selected recommended icon by taking account of the received selection signal; and
recording the use frequency of the executed function.

4. The method of claim 1, wherein the preset criterion is an application type,
wherein the selecting of the at least one of the multiple functions comprises:
recognizing hovering according to the input proximity touch in execution of any one type of application among application types; and
acquiring information about the application in recognition of hovering and loading a function related to the application, and
wherein the executing of the function corresponding to the recommended icon selected from the displayed recommended icon comprises:
receiving a selection signal of the recommended icon, generated by a touch input, in generation of the touch input; and
executing the function corresponding to the selected recommended icon, taking account of the received selection signal.

5. The method of claim 3 or 4, wherein the recognizing of the hovering comprises changing a distance from which the hovering is recognized by user's manipulation.

6. The method of claim 1, wherein the displaying of the icon corresponding to the selected function as the recommended icon comprises:
displaying the recommended icon so as to overlap with a menu item or icon which is previously displayed.

7. The method of claim 1, wherein the displaying of the icon corresponding to the selected function as the selected icon comprises:
determining a number of recommended icons to be displayed on an empty region, taking account of a size of the empty region on the entire display region; and
displaying the recommended icons on the empty region, taking account of the determined number of recommended icons and a predetermined priority of the selected function.

8. The method of claim 1, wherein the displaying of the icon corresponding to the selected function as the recommended icon comprises:
displaying the recommended icon in a semi-transparent or opaque form.

9. The method of claim 1, wherein the displaying of the icon corresponding to the selected function as the recommended icon comprises:
displaying the recommended icon in an opaque form; and
displaying the recommended icon in a semi-transparent form if the recommended icon overlaps with another displayed menu item or icon.

10. The method of claim 1, further comprising:
after the displaying of the icon corresponding to the selected function as the recommended icon, moving the recommended icon to and displaying the recommended icon in a recognition position of the hovering upon input of a preset key of an input means including the preset key corresponding to a function of moving the recommended icon.

11. The method of claim 1, further comprising:
after the displaying of the icon corresponding to the selected function as the recommended icon, displaying a description of the recommended icon on a preset region if the input means approaches one of the displayed recommended icons.

12. The method of claim 1, further comprising:
after the displaying of the icon corresponding to the selected function as the recommended icon, displaying a description of the recommended icon on a preset region, upon input of a preset key of an input means including the preset key corresponding to a function of displaying a description of a function of the recommended icon.

13. An apparatus for providing a user interface through a proximity touch input, the apparatus comprising:
a touch screen for receiving input corresponding to a user's manipulation and for displaying an execution image of an application program, an operating state, and a menu state; and
a controller for controlling the touch screen and for controlling an operation of selecting at least one of multiple functions according to a preset criterion upon generation of a proximity touch input by an input means, an operation of displaying an icon corresponding to the selected function as a recommended icon, and an operation of executing a function corresponding to a recommended icon selected from the displayed recommended icon.

14. The apparatus of claim 13, wherein the preset criterion is a recorded use frequency of a function,
wherein the operation of selecting the at least one of the multiple functions comprises:
recognizing hovering according to the input proximity touch;
loading a function list in an order from high use frequency to low use frequency by taking account of a use frequency in recognition of hovering and loading the function list; and
loading a default function list if there is no record of the use frequency of the function in recognition of hovering, and
wherein the operation of executing the function corresponding to the recommended icon selected from the displayed recommended icon comprises:
recording the use frequency of the executed function.

15. The apparatus of claim 13, wherein the preset criterion is an application type,
wherein the operation of selecting the at least one of the multiple functions comprises:
recognizing hovering according to the input proximity touch in execution of any one type of application among application types; and
acquiring information about the application in recognition of hovering and loading a function related to the application.
